# FASCICULE DE BREVET EUROPEEN

(11) **EP 3 787 392 B1**
(45) Date de publication et mention de la délivrance du brevet: **22.04.2026**
(21) Numéro de dépôt: 19720129.6
(22) Date de dépôt: 29.04.2019
(51) Int. Cl.: A01D 57/20

(54) **MACHINE AGRICOLE POUR LA RECOLTE DE VEGETAUX EQUIPEE D'UN CONVOYEUR**
LANDWIRTSCHAFTLICHE MASCHINE MIT EINEM FÖRDERER ZUM ERNTEN VON PFLANZEN
AGRICULTURAL MACHINE FOR HARVESTING PLANTS, COMPRISING A CONVEYOR

(30) Priorité: 03.05.2018 FR 1853821
(43) Date de publication de la demande: 10.03.2021
(73) Titulaire: Kuhn SAS, 67700 Saverne (FR)
(72) Inventeur: BILLARD, Sylvain, 67440 REINHARDSMUNSTER (FR)
(74) Mandataire: Ipsilon
(86) Numéro de dépôt international: PCT/EP2019/060892
(87) Numéro de publication internationale: WO 2019/211229

(56) Documents cités:
- EP-A1- 1 616 474
- EP-A1- 2 042 025
- EP-A1- 2 529 614
- EP-A2- 1 389 413
- EP-B1- 2 042 025
- EP-B1- 2 529 614
- DE-U1- 202011 101 277

## Description

L'invention se rapporte au domaine du machinisme agricole et porte sur une machine permettant de réaliser des opérations dans un champ ou une prairie.

Elle concerne spécifiquement une machine pour la récolte de végétaux, du type machine de fenaison, et plus particulièrement une faucheuse équipée d'un convoyeur.

De nombreuses machines de ce type sont déjà connues dans l'état de la technique.

Ainsi, par le document EP 1 444 880, on connaît une faucheuse tractée comprenant un groupe de fauche équipé à l'arrière d'un convoyeur du type bande transporteuse amenant une partie au moins des végétaux coupés sur le côté latéral de la machine.

Cette bande transporteuse est solidarisée de manière articulée et avec faculté de déplacement latéral au groupe de fauche par l'intermédiaire d'une structure de liaison comportant deux bras parallèles montés pivotants sur ledit groupe de fauche et sur le convoyeur.

Les bras précités relient tous deux le bâti du groupe de fauche avec l'arrière du convoyeur.

Les inconvénients de la réalisation de ce document EP 1 444 880 sont les suivants :
- le convoyeur ne peut pas être escamoté vers le haut de sorte qu'il n'est pas possible de déposer les végétaux autrement que sous forme d'andains,
- les contraintes mécaniques dans la structure de liaison sont importantes du fait que le convoyeur n'est maintenu que d'un côté et compte tenu de la distance séparant les connexions bras-bâti d'avec le centre de gravité du convoyeur,
- chaque bras présente une portion sensiblement verticale à l'arrière de la structure de liaison et une portion horizontale au-dessus, cette portion horizontale étant éloignée de la surface de travail du convoyeur afin de ne pas perturber le flux de végétaux. Il résulte d'une telle envergure des bras un poids important de la structure de liaison elle-même et donc des contraintes mécaniques élevées induites par celle-ci,
- la partie de la structure de liaison située à l'arrière du convoyeur augmente également le poids global de la construction et éloigne son centre de gravité de son point de fixation sur le bâti. Cet éloignement implique une sollicitation mécanique particulièrement importante dans la structure de liaison.

La demanderesse commercialise, sous la désignation FC 883 RA, une faucheuse équipée d'un convoyeur latéral arrière, qui comprend un bâti articulé avec une structure de support reliée à ou faisant partie d'un véhicule moteur pouvant être déplacé selon une direction d'avance. Ce bâti porte un groupe de fauche destiné à faucher des végétaux sur pied et est déplaçable par rapport à la structure de support entre une configuration de travail dans laquelle le groupe de fauche s'étend latéralement par rapport à la structure de support, et une configuration de transport dans laquelle l'envergure de la machine mesurée horizontalement et perpendiculairement à la direction d'avance est réduite.

Dans cette machine FC 883 RA, un convoyeur est disposé à l'arrière du groupe de fauche selon la direction d'avance et permet le transfert des végétaux préalablement fauchés dans une direction transversale à la direction d'avance. Ce convoyeur est relié au bâti par l'intermédiaire d'une structure de liaison autorisant, au moins lorsque le groupe de fauche est en configuration de travail, un déplacement latéral du convoyeur par rapport au bâti au cours duquel le convoyeur se déplace entre une position intérieure dans laquelle le convoyeur est proche de la structure de support et une position extérieure dans laquelle il est plus éloigné de la structure de support.

Un premier inconvénient de cette machine commercialisée réside dans le fait que, pour transférer le convoyeur entre les positions intérieure et extérieure, il est nécessaire de désolidariser le convoyeur ainsi qu'une partie de la structure de liaison, du reste de ladite structure. Cette intervention est compliquée, nécessite un outillage spécifique et requiert obligatoirement l'immobilisation de la machine. Réalisable sans trop de contrainte lorsqu'elle est exceptionnelle, cette tâche de réglage devient vite fastidieuse en cas de répétitions.

La structure de liaison de cette machine présente en outre un nombre de composants et des dimensions tels qu'elle est mécaniquement fortement sollicitée, notamment au niveau de ses connexions avec le bâti et/ou avec le convoyeur. Un dimensionnement conséquent desdites connexions est donc nécessaire.

De plus, la structure de liaison de cette machine s'étendant au-dessus du convoyeur, son envergure doit être importante afin de ne pas perturber le flux de fourrage provenant du groupe de fauche et dirigé vers le convoyeur.

Par ailleurs, afin d'assurer le maintien du convoyeur et le déplacement transversal de celui-ci, la structure de liaison comporte également un nombre importants d'articulations qui complexifie la mécanique de la machine et augmente ses coûts de fabrication et d'entretien.

Enfin, comme dans la plupart des réalisations antérieures, le convoyeur est partiellement accroché à une partie de la structure de liaison s'étendant par-dessus ledit convoyeur.

Ainsi, un premier objectif de la présente invention est de proposer une machine agricole du type mentionné ci-dessus dont le convoyeur peut être transféré latéralement de manière simple.

Le document EP 2 529 614 divulgue également une machine correspondant au type précité où le convoyeur peut être escamoté vers le haut, d'une part, et déplacé latéralement d'autre part. Un inconvénient de cette machine est que le convoyeur est articulé au bâti par le biais d'une structure de liaison comportant de multiples liaisons pivots d'axes parallèles. L'assemblage du convoyeur avec le bâti peut engendrer des contraintes internes dues aux imprécisions de fabrication des divers composants de ces nombreuses liaisons pivots. Il est alors nécessaire de prévoir une structure de liaison conséquente permettant de résister à ces contraintes.

En outre, le transfert en position relevée du convoyeur de la machine décrite dans ce document EP 2 529 614 est réalisé par deux actionneurs reliés à une même pièce. Or, même lorsque ces deux actionneurs sont commandés simultanément, il peut se produire une désynchronisation des actionnements respectifs de ces deux actionneurs impliquant d'importantes contraintes au niveau de la structure de liaison, qui s'ajoutent aux contraintes internes mentionnées précédemment. La désynchronisation des mouvements des actionneurs d'escamotage doit alors être compensée par la rigidité de la structure de liaison, notamment par le biais d'une liaison mécanique adéquate entre les deux branches.

Un objectif supplémentaire de l'invention est de proposer une machine de ce type dont la structure de liaison est réalisée et agencée de manière à minimiser le nombre de ses composants, son poids et les contraintes mécaniques qu'elle occasionne.

Un autre objectif encore est de proposer une machine de construction globale plus simple, tout en disposant d'un convoyeur plus facilement manœuvrable, et dont le coût de fabrication et d'entretien est réduit.

En vue d'atteindre au moins le premier objectif évoqué précédemment, l'invention a pour objet une machine agricole pour la récolte de végétaux, du type faucheuse, selon le préambule de la revendication 1 et présentant également les caractéristiques de la partie caractérisante de cette revendication 1.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
les figures 1A et 1B sont des vues de dessus d'une machine agricole du type faucheuse à convoyeur selon un premier mode de réalisation de l'invention, dans lesquelles le groupe de fauche est en configuration de travail et le convoyeur en position abaissée, le convoyeur étant respectivement dans deux positions extrêmes de déport transversal, à savoir en position intérieure (proximal de la structure de support) sur la figure 1A et en position extérieure (à distance de la structure de support) sur la figure 1B ;
la figure 1C est une vue de côté de la machine agricole représentée sur la figure 1B ;
la figure 2 est une vue en perspective d'un ensemble [convoyeur/structure de liaison] selon un second mode de réalisation préféré de l'invention ;
la figure 3 est une vue de derrière d'un ensemble [convoyeur/structure de liaison] faisant partie de la machine représentée figure 1B ;
les figures 4 et 5 sont des vues, respectivement de dessus (figure 4 - la bride étant réglée en position proximale de la structure de support) et depuis l'extérieur (figure 5 - vue en direction de la structure de support depuis le côté droit de la figure 4) d'un ensemble [convoyeur/structure de liaison] selon le mode de réalisation préféré de l'invention représenté figure 2 ;
la figure 6 est une vue depuis l'intérieur d'un ensemble convoyeur/structure de liaison] faisant partie de la machine représentée figures 1B ;
la figure 7 est une vue de côté d'une machine agricole telle que représentée figures 1A à 1C, avec le convoyeur en position relevée ;
la figure 8 est une vue en perspective de la machine agricole selon l'invention attelée à un tracteur où le groupe de fauche est en configuration de transport ;
la figure 9 est une vue de dessus de la machine agricole selon l'invention où le groupe de fauche est en configuration de transport ;
les figures 10 et 11 sont des vues de dessus d'un ensemble [convoyeur/structure de liaison] selon le mode de réalisation préféré de l'invention (figures 2, 4 et 5), dans lesquelles le convoyeur est respectivement dans deux positions extrêmes de déport transversal, à savoir en position intérieure (de la structure de support) sur la figure 10 et en position extérieure (à distance de la structure de support) sur la figure 11, et dans lesquelles la bride est réglée en position distale de la structure de support, et,
la figure 12 est une en perspective d'un ensemble [convoyeur/structure de liaison] selon le mode de réalisation préféré de l'invention.

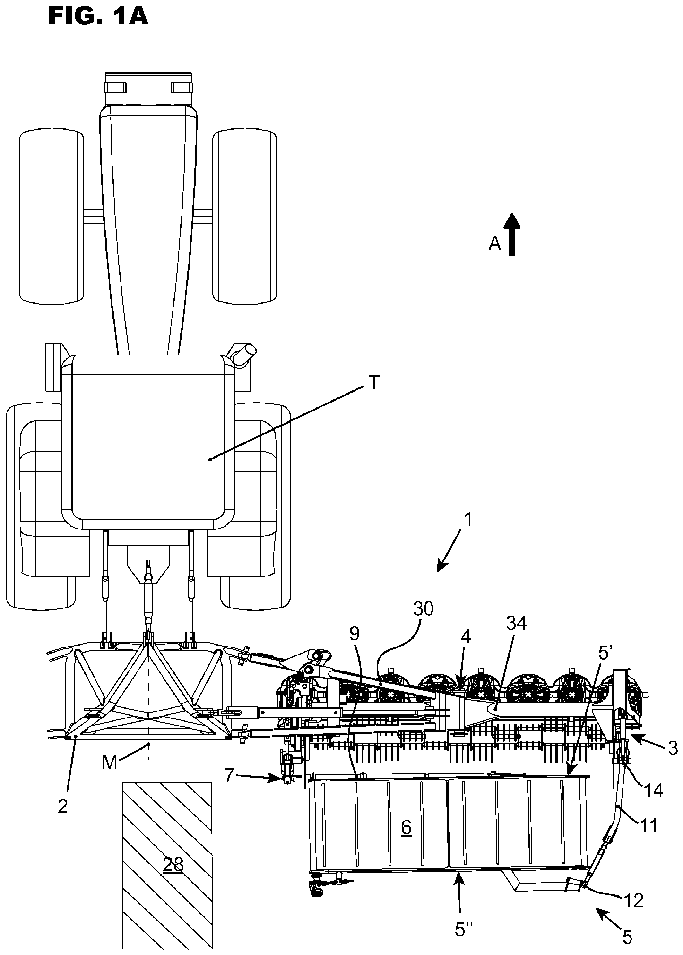

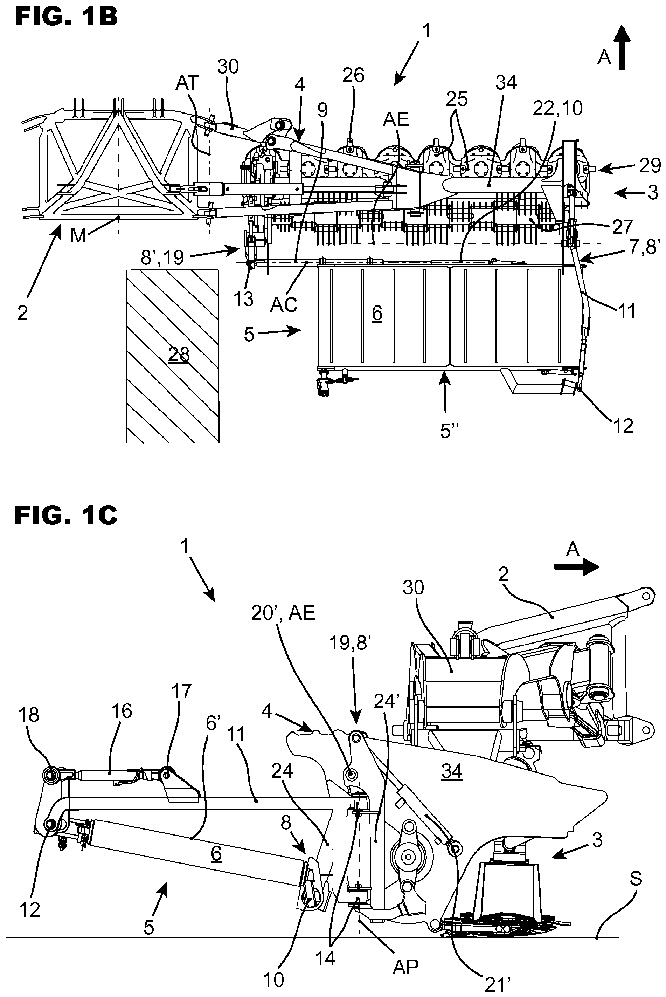

Comme le montrent les figures 1 à 12, l'invention concerne une machine agricole 1 pour la récolte de végétaux, du type faucheuse.

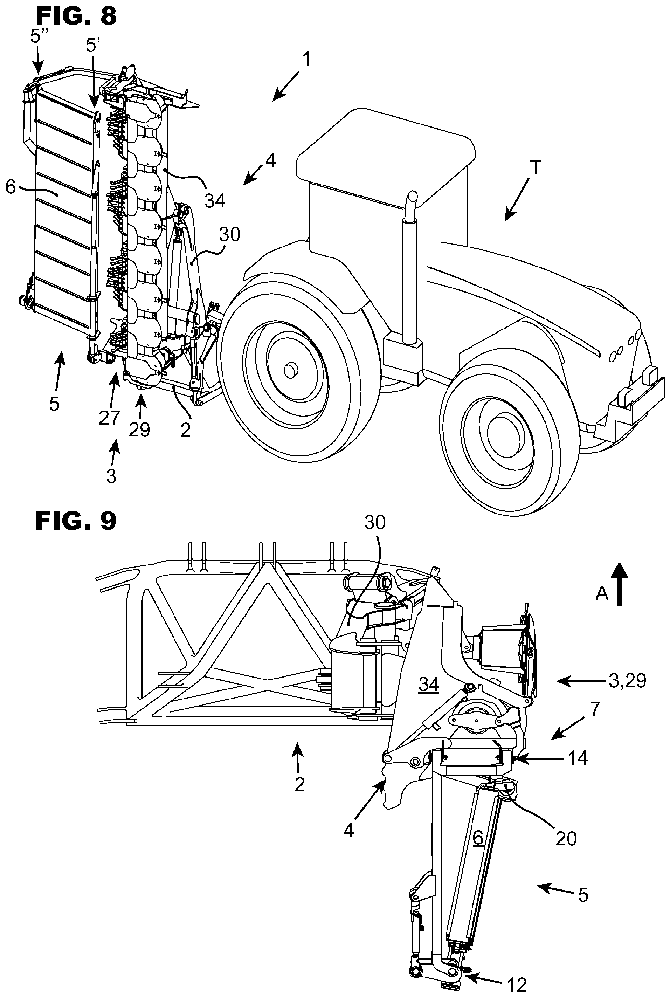

Cette machine 1 comprend essentiellement une structure de support 2, un groupe de fauche 3 et un bâti 4 reliant de manière articulée la structure de support 2 et le groupe de fauche 3 de manière à déplacer ledit groupe de fauche 3 entre, d'une part, une configuration de travail dans laquelle il est en appui sur le sol S et s'étend latéralement par rapport à la structure de support 2 et sensiblement perpendiculairement à la direction d'avance A de la machine 1 et, d'autre part, une configuration de transport dans laquelle il est dans une position relevée à distance du sol S. Dans la configuration de transport, le groupe de fauche 3 est en outre replié vers la structure de support 2 (voir figures 8 et 9).

La structure de support 2 peut comporter un train d'attelage pour l'accrochage de la machine 1 à un tracteur T ou peut faire partie d'une faucheuse automotrice. Le bâti 4 peut être réalisé en une ou plusieurs partie(s). Dans la réalisation représentée, il comprend une potence 30 articulée avec la structure de support 2, préférentiellement autour d'un axe sensiblement horizontal. La potence 30 peut d'autre part être articulée avec un châssis 34, préférentiellement autour d'un axe dirigé sensiblement parallèlement à la direction d'avance A.

Cette machine 1 comprend également un convoyeur 5 ou un dispositif transporteur analogue, disposé à l'arrière du groupe de fauche 3 selon la direction d'avance A et comportant un organe mobile 6 transférant les végétaux fauchés transversalement par rapport à la direction d'avance A, ledit convoyeur 5 présentant un côté longitudinal avant 5' plus proche du groupe de fauche 3 et un côté longitudinal arrière 5" plus éloigné de ce dernier et ledit convoyeur 5 étant relié au bâti 4 par une structure de liaison 7 autorisant, au moins lorsque le groupe de fauche 3 est dans sa configuration de travail, un déplacement latéral du convoyeur 5 au moins entre une position intérieure et une position extérieure.

Afin de pouvoir choisir sélectivement un mode de fauchage avec ou sans formation d'andains, la structure de liaison 7 comprend également un dispositif de basculement 19. Celui-ci raccorde de manière articulée le convoyeur 5 au bâti 4. Il comporte en outre au moins deux actionneurs d'escamotage 21 et 21' destinés à transférer le convoyeur 5 entre une position abaissée et une position relevée. Dans la position abaissée du convoyeur 5, la ou au moins une surface de travail 6' de l'organe 6 est sensiblement horizontale ou présente une légère inclinaison vers l'avant. Dans la position relevée, le convoyeur 5 est éloigné du sol S, et est préférentiellement plus éloigné du sol S qu'en position abaissée. Le dispositif de basculement 19, respectivement les actionneurs d'escamotage 21 et 21', permet(tent) ledit transfert du convoyeur 5 par pivotement autour d'un axe d'escamotage AE sensiblement horizontal.

La structure de liaison 7 comporte deux branches articulées 8 et 8', la première branche articulée 8 et la deuxième branche articulée 8' sont distinctes et chacune de ces première et deuxième branches articulées 8 et 8' relie le bâti 4 au convoyeur 5.

Conformément à l'invention, chacune des première et seconde branches articulées 8 et 8' intègre au moins une liaison rotule 10, 12, 13, 14, 15, 17, 18, 38 et est associée à un actionneur d'escamotage 21, 21'.

Grâce aux degrés de libertés inhérentes aux liaisons rotules, l'intégration d'au moins une rotule par branche articulée 8,8' permet de faciliter le montage du convoyeur 5 et d'éviter les contraintes internes dans la structure de liaison 7. De plus, le fait que chaque branche articulée 8, 8' soit distincte de l'autre branche articulée 8, 8' et soit associée à un actionneur d'escamotage 21, 21' propre permet une diminution supplémentaire des contraintes dans la structure de liaison 7 lors du transfert du convoyeur 5 entre ses positions abaissée et relevée, notamment lorsque l'actionnement des actionneurs d'escamotage n'est pas simultané.

Le fait que la structure de liaison 7 soit moins sollicitée permet de ralentir sa fatigue et d'allonger sa durée de vie. Grâce à ces contraintes réduites, il est également possible d'alléger certaines pièces voire toute la structure de liaison 7, par exemple en la/les fabriquant en aluminium (au lieu de l'acier ou de la fonte). Il peut en résulter un gain de plusieurs dizaines de kilogrammes.

De plus, la structure de liaison 7 ne comporte que deux branches articulées 8 et 8' et est constituée d'un nombre limité de parties, ces parties étant en outre agencées de manière à minimiser le poids global de la structure de liaison 7, ainsi que les contraintes mécaniques induites par son poids propre. Ainsi, la structure de liaison selon l'invention est à la fois simple constructivement, économique à fabriquer et d'un poids global limité.

Lorsqu'il est indiqué que la première branche articulée 8 et la deuxième branche articulée 8' sont (mutuellement) distinctes, on entend dans la présente description que leurs mouvements respectifs lors du transfert entre les positions abaissée et relevée peuvent être indépendants, au moins sur une plage de pivotement donnée. En outre, lors du déplacement latéral du convoyeur 5, les mouvements respectifs des branches articulées 8 et 8' peuvent aussi être dissemblables. On note que les branches articulées 8 et 8' sont reliées mécaniquement uniquement par le convoyeur 5 d'une part et par le bâti 4 d'autre part.

Il est souligné que les liaisons rotules peuvent être réalisées par une ou des parties sphériques mâles et femelles. Elles peuvent cependant également être réalisées par des liaisons pivots avec des axes croisés et/ou réalisés en matière souple, par exemple en élastomère ou caoutchouc de type connu sous la désignation « silentbloc » (nom déposé).

Sur le type de machine 1 précité, le groupe de fauche 3 fauche les végétaux sur pied lorsque la machine 1 se déplace selon la direction d'avance A. Afin de maximiser la largeur de travail de la machine 1, lorsque le groupe de fauche 3 est en configuration de travail, il est de préférence orienté sensiblement perpendiculairement à la direction d'avance A (voir figure 1A).

Le groupe de fauche 3 comprend préférentiellement une barre de fauche 29 et un élément conditionneur 27 positionné à l'arrière, selon la direction d'avance A, de la barre de fauche 29. La barre de fauche 29 est de préférence dotée de disques 25 entrainés en rotation autour d'axes 25' sensiblement verticaux et sur lesquels des couteaux 26 sont montés pivotant. L'élément conditionneur 27 se présente par exemple sous la forme d'un rouleau entrainé autour d'un axe sensiblement horizontal et perpendiculaire à la direction d'avance A et pouvant être équipé de doigts radiaux. Il pourrait également être réalisé par deux rouleaux entrainés en sens contraire autour d'axes sensiblement horizontaux et perpendiculaires à la direction d'avance A et présentant des profils interpénétrant. Le groupe de fauche 3 comporte notamment l'élément conditionneur 27 et la barre de fauche 29.

De préférence, et comme représenté, l'organe mobile 6 est réalisé sous la forme d'une bande sans fin tendue et entrainée par des rouleaux. On désigne comme surface de travail 6', la face supérieure de l'organe mobile 6, respectivement de ladite bande, lorsque le convoyeur 5 est en position abaissée.

L'élément conditionneur 27 permet un séchage plus rapide des végétaux fauchés. Il projette ces derniers vers l'arrière, générant ainsi un flux de végétaux fauchés dirigé vers le convoyeur 5, plus précisément vers la surface de travail 6' lorsque le convoyeur 5 est dans sa position abaissée.

Une fois les végétaux fauchés disposés sur la surface de travail 6', l'organe mobile 6 peut les transférer transversalement à la direction d'avance A. L'organe mobile 6 dépose alors les végétaux fauchés sur le côté du convoyeur 5 en un andain 28. Cette dépose des végétaux fauchés en un andain 28 résulte de l'avance de la machine 1 dans la direction d'avance A.

Le déplacement latéral du convoyeur 5 permet d'ajuster la distance entre un bord de l'andain 28 et la structure de support 2. Ainsi, l'andain 28 peut être déposé proche de la structure de support 2 (figure 1A) ou plus écarté par rapport à cette dernière (figure 1B), ou à une distance comprise entre ces deux positions extrêmes.

Afin de pouvoir déposer les végétaux fauchés de chaque côté du convoyeur 5, l'organe mobile 6 peut être agencé de manière à transférer les végétaux fauchés dans une direction orthogonale à la direction d'avance A. Dans le mode de réalisation préféré, l'organe mobile 6 transfère les végétaux fauchés en direction de la structure de support 2, de sorte que l'andain 28 soit déposé du côté de la structure de support 2.

Dans un mode de réalisation particulier, la machine 1 peut comprendre deux groupes de fauche 3, chacun disposé latéralement de part et d'autre de la structure de support 2. Lorsque les deux convoyeurs 5 transfèrent les végétaux fauchés en direction de la structure de support 2, le déplacement latéral de l'un ou des deux convoyeur(s) 5 permet alors avantageusement de modifier la largeur de l'andain 28.

De préférence, le dispositif de basculement 19 comprend un premier bras de levier 24 et un deuxième bras de levier 24', chacun reliant le convoyeur 5 au bâti 4 et situés chacun avantageusement à proximité de l'une des deux extrémités latérales du convoyeur 5.

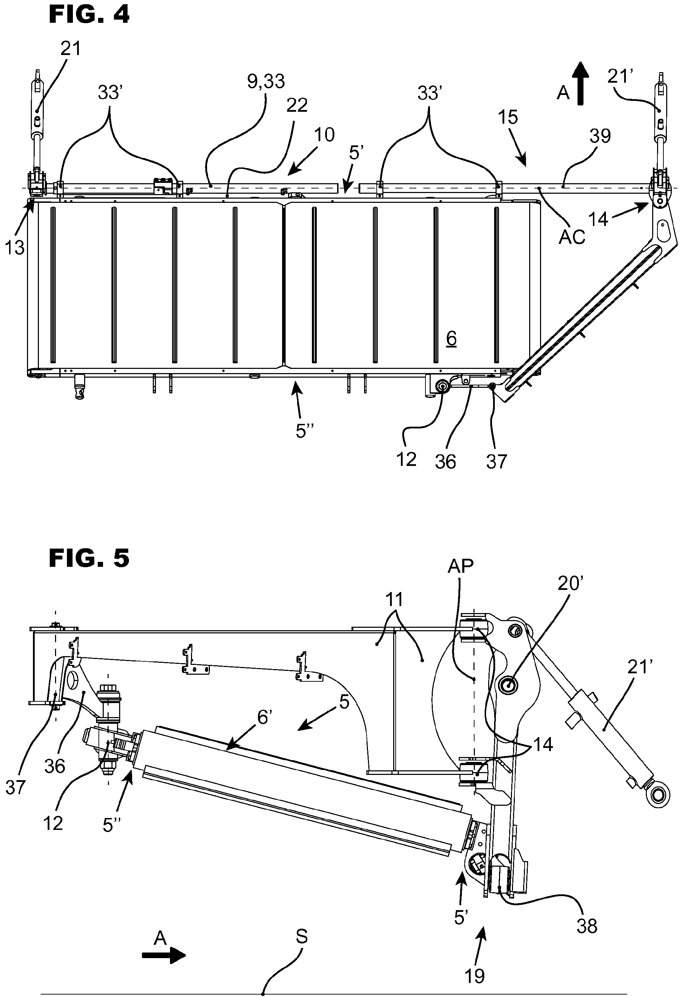

Conformément à l'invention et ainsi qu'il est représenté sur les figures 1B et 4, la première branche articulée 8 comprend un bras avant 9 articulé avec le convoyeur 5 par une articulation longitudinale 10 située au niveau du côté avant 5' du convoyeur 5. L'articulation longitudinale 10 est destinée à guider le déplacement latéral du convoyeur 5.

En accord avec le mode de réalisation préféré, la deuxième branche articulée 8' comprend un bras jumeau 39 articulé avec le convoyeur 5 par une deuxième articulation longitudinale 15. Cette deuxième articulation longitudinale 15 est située au niveau du côté avant 5' du convoyeur 5, et de préférence destinée à guider le déplacement latéral du convoyeur 5. Le fait que l'articulation 10 ou les articulations 10 et 15 permettant le guidage du déplacement latéral du convoyeur 5 soi(en)t placé(es) à l'avant du convoyeur 5 permet d'approcher du bâti 4 le centre de gravité de la structure de liaison 7, diminuant davantage les contraintes dans la structure de liaison 7. Le bras jumeau 39 permet en outre de consolider et de rigidifier davantage la structure de liaison 7 (liaison additionnelle).

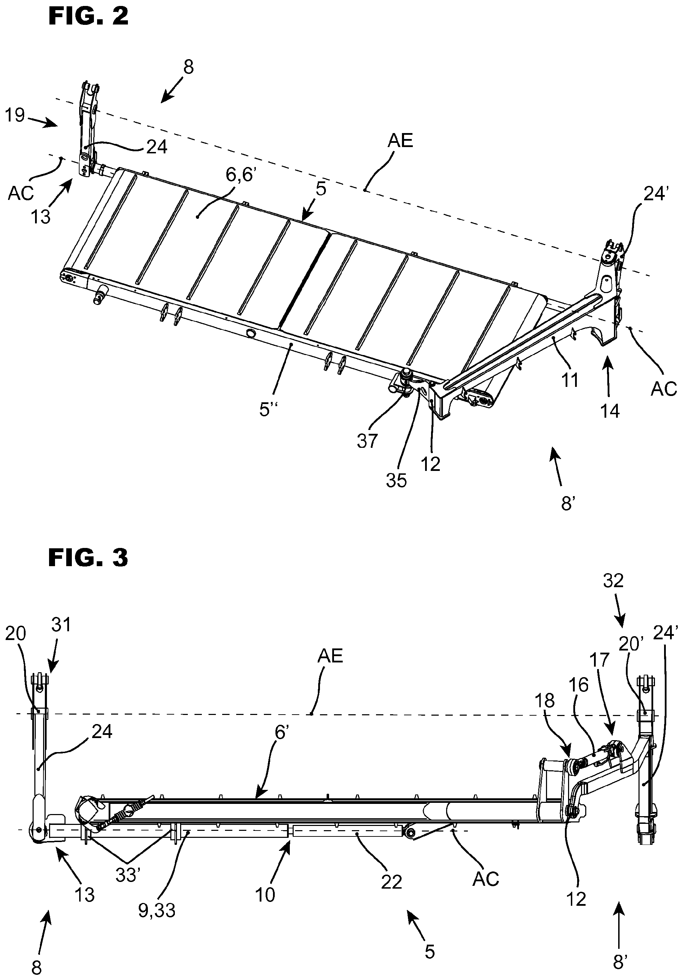

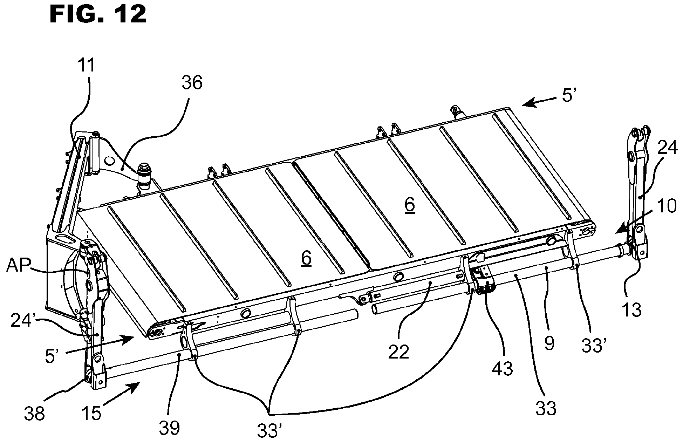

Ainsi que représenté sur les figures 3 et 12 notamment, le bras avant 9 est articulé avec le bâti 4, respectivement avec le bras de levier 24, par une articulation avant 13, de préférence située au niveau du côté avant 5' du convoyeur 5. Au moins une des articulation longitudinale 10 et articulation avant 13 est une liaison rotule.

Dans le cadre du mode de réalisation préféré de l'invention, le bras jumeau 39 est articulé avec le bâti 4, respectivement avec le deuxième bras de levier 24', par une articulation extérieure 38, de préférence située au niveau du côté avant 5' du convoyeur 5. Au moins une des deuxième articulation longitudinale 15 et articulation extérieure 38 est une liaison rotule.

Suivant la structuration faite dans la présente description, et en accord avec les figures annexées, l'articulation longitudinale 10 et l'articulation avant 13 sont comprises dans la première branche articulée 8.

En accord avec une caractéristique constructive avantageuse de l'invention, l'articulation longitudinale 10 est de type pivot glissant. Dans le mode de réalisation préféré, l'articulation longitudinale 10 est de type glissière avec un axe de coulissement AC sensiblement perpendiculaire à la direction d'avance A. L'articulation avant 13 est alors de préférence de type rotule. L'axe de coulissement AC est par ailleurs sensiblement parallèle au côté avant 5' du convoyeur 5.

Une telle construction permet de réduire au minimum la composante de déplacement selon la direction d'avance A, et de conserver un écart minimal entre le côté longitudinal avant 5' du convoyeur 5 et le groupe de fauche 3, permettant ainsi d'éviter des pertes de fourrage.

La deuxième articulation longitudinale 15 peut également être de type pivot glissant. Dans le mode de réalisation préféré, la deuxième articulation longitudinale 15 est de type glissière, avec un axe de coulissement parallèle à l'axe de coulissement AC, et de préférence confondu avec celui-ci. L'articulation avant 38 est alors de préférence de type rotule. Il ressort de ce qui précède que chacune des branches articulées 8 et 8' est articulée avec le convoyeur 5 par au moins une liaison rotule.

Une telle construction permet que le déplacement latéral du convoyeur 5 se compose uniquement d'une translation selon l'axe de coulissement AC, permettant de réduire davantage les pertes de fourrage. Ainsi, le déplacement latéral du convoyeur 5 ne comprend aucune composante de pivotement, ni de composante verticale de translation.

Les axes de coulissement AC et d'escamotage AE peuvent avantageusement être parallèles entre eux.

Conformément à l'invention et ainsi qu'il ressort des figures, la deuxième branche articulée 8' comprend un bras latéral 11 relié avec le convoyeur 5 au niveau du côté arrière 5" du convoyeur 5 par au moins une articulation. De plus, le convoyeur 5 est avantageusement soutenu à l'arrière uniquement par le bras latéral 11, de sorte à approcher du bâti 4 le centre de gravité de la structure de liaison 7. Ces mesures permettent d'éviter que le convoyeur 5 ne soit disposé en porte à faux, diminuant ainsi encore les contraintes dans la structure de liaison 7.

Le bras latéral 11 est, en outre, relié avec le bâti 4 par une articulation latérale 14. En accord avec une autre caractéristique constructive avantageuse de l'invention, l'articulation latérale 14 est de type pivot avec un axe de pivotement AP sensiblement perpendiculaire à l'axe de coulissement AC, et de préférence sensiblement vertical. Lorsque l'articulation avant 13 est de type rotule, le guidage du déplacement latéral du convoyeur 5 est dicté par l'orientation de l'axe AP.

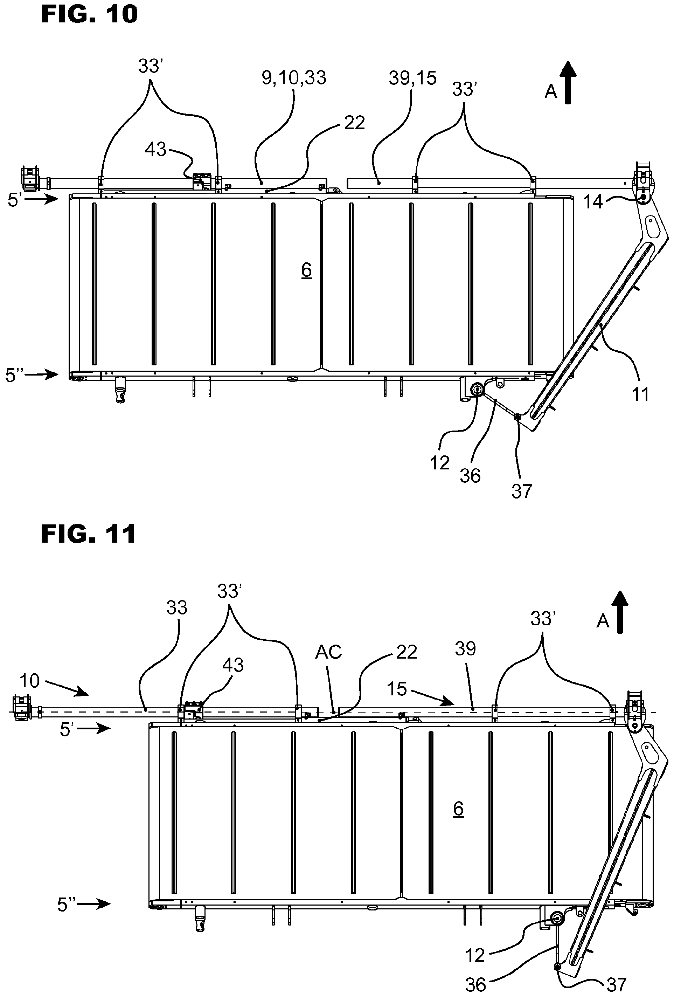

Dans le mode de réalisation préféré, le bras latéral 11 est relié avec le convoyeur 5 par l'intermédiaire d'une biellette 36 articulée avec le convoyeur 5 par une première articulation arrière 12 et avec ledit bras latéral 11 par une deuxième articulation arrière 37. Les première et deuxième articulations arrières 12 et 37 sont des liaisons pivots avec des axes parallèles à l'axe de pivotement AP. Cette disposition technique permet de garantir le maintien du convoyeur 5 dans un plan donné. De ce fait, l'orientation de la surface de travail 6' de l'organe mobile 6 conserve la même orientation par rapport au sol (S) depuis la position intérieure du convoyeur 5 (figures 1A et 10) jusqu'à sa position extérieure (figures 1B et 11), permettant d'obtenir des andains réguliers.

En plaçant les articulations 10, 13, 14 et 15 à l'avant du convoyeur 5, les efforts dans la structure de liaison 7 liés au poids de cette dernière ainsi que celui du convoyeur sont considérablement réduits par rapport aux machines antérieurs de ce type. Les première et deuxième articulations arrières 12 et 37 se trouvent quant à elles, à l'arrière du convoyeur 5. Le convoyeur 5 est ainsi supporté par le tracteur T via la structure de support 2, le bâti 4 et la structure de liaison 7. La machine 1 est de type portée, ne disposant, en configuration de transport du groupe de fauche 3, d'aucun appui au sol S que ceux du tracteur T, procurant ainsi une bonne maniabilité à l'ensemble tracteur T - machine 1.

Les contraintes dans la structure de liaison 7 sont également faibles grâce à la liaison glissière de l'articulation longitudinale 10 qui permet avantageusement de maintenir le convoyeur 5 à proximité de la structure de support 2, ce quelle que soit la position du convoyeur 5 par rapport à un plan médian M de la structure de support 2.

Selon une réalisation pratique préférée de la machine agricole 1 selon l'invention, le bras avant 9 est solidarisé d'une part, directement ou indirectement, avec le bâti 4 au niveau d'une région proche d'une extrémité 23 du côté avant longitudinal 5', et d'autre part avec le convoyeur 5 par la liaison glissière de l'articulation longitudinale 10. Le bras avant 9 s'étend sensiblement perpendiculairement à la direction d'avance A.

En outre, le bras latéral 11 est relié au convoyeur 5 par la première articulation arrière 12 au niveau d'une région proche d'une extrémité 23' du côté arrière longitudinal 5", qui est préférentiellement diagonalement opposée à l'extrémité 23 du côté avant précitée. Le bras latéral 11 s'étend sensiblement parallèlement à la direction d'avance A.

L'extrémité 23 du convoyeur 5 est préférentiellement située du côté de la structure de support 2. On peut noter que du fait de la mise en œuvre d'un bras avant 9 qui s'étend le long du côté avant longitudinal 5' du convoyeur 5, aucun obstacle ne s'oppose au déversement précité.

De plus, la configuration précitée des bras avant 9 et bras latéral 11 et l'arrangement de leurs liaisons articulées respectives avec le convoyeur 5, permet de s'affranchir de la présence de tout dispositif porteur ou d'accrochage s'étendant, en position abaissée du convoyeur 5, par-dessus la surface de travail 6'.

Afin d'autoriser un déplacement latéral important du convoyeur 5, tout en limitant l'interférence du bras latéral 11 avec les végétaux transportés par l'organe mobile 6, il est favorable que la distance entre les articulations avant 13 et latérale 14 soit supérieure à la longueur du convoyeur 5.

De manière complémentaire, il peut être prévu que le bras latéral 11 présente au moins un léger cintrage ou une inflexion (voir figures 1).

La position abaissée du convoyeur 5 correspond à sa position de travail, dans laquelle il peut transférer les végétaux fauchés transversalement à la direction d'avance A. Le convoyeur 5 peut occuper la position abaissée d'une part, lorsque le groupe de fauche 3 est en configuration de travail comme cela est illustré sur les figures 1C et 5, et, d'autre part, lorsque le groupe de fauche 3 est en configuration de transport comme cela est illustré sur les figures 8 et 9. Dans sa position abaissée, le convoyeur 5 peut occuper les positions intérieure, extérieure, ou toute autre position intermédiaire entre ces deux positions, permettant ainsi de déposer les végétaux fauchés plus ou moins loin du plan médian M de la structure de support 2.

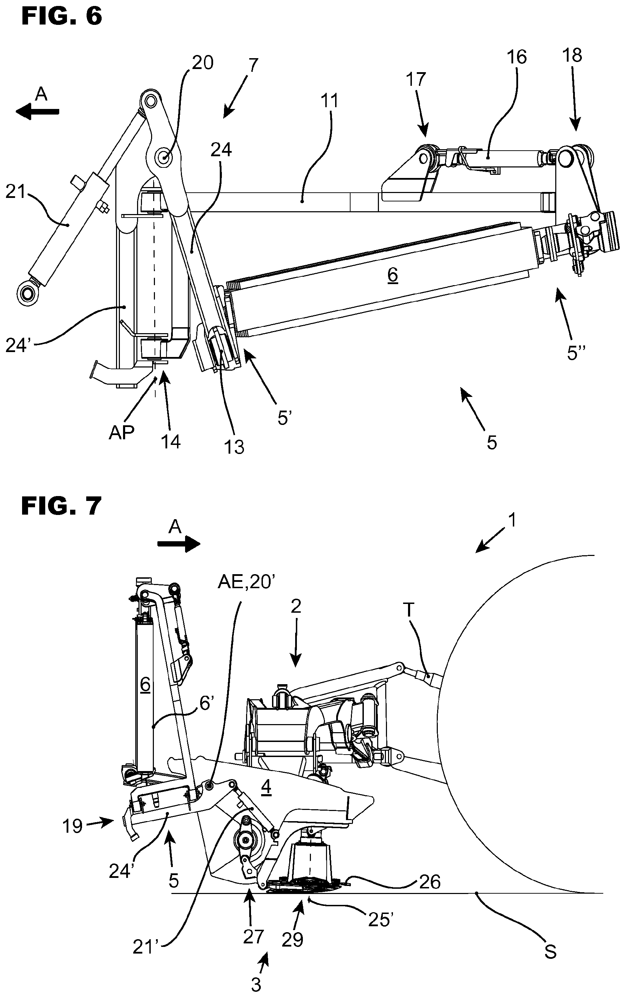

Comme l'illustre la figure 7, le convoyeur 5 peut occuper la position relevée lorsque le groupe de fauche 3 est en configuration de travail. Dans la position relevée du convoyeur 5, celui-ci est escamoté, ne permettant pas le déplacement transversal de végétaux fauchés. De manière préférentielle, en position relevée, la surface de travail 6' est sensiblement verticale. Dans la position relevée, le convoyeur 5 peut se trouver en position intérieure, extérieure, ou dans n'importe quelle position où son éloignement avec le plan médian M est compris entre les positions intérieure et extérieure.

Comme cela est visible sur les figures 8 et 9, dans la configuration de transport du groupe de fauche 3, ce dernier est préférentiellement positionné sensiblement verticalement afin de diminuer l'envergure de la machine 1 mesurée horizontalement et perpendiculairement à la direction d'avance A. Avec cela, dans la configuration de transport du groupe de fauche 3, le convoyeur 5 est de préférence en position extérieure, et, d'autre part, de préférence en position abaissée. Afin de rapprocher du tracteur T le centre de gravité de la machine 1, le convoyeur 5 peut également se trouver en position relevée lorsque le groupe de fauche 3 est en configuration de transport.

Afin d'aboutir à sa configuration de transport de manière simple, le groupe de fauche 3 est pivoté depuis sa configuration de travail autour d'un axe AT de transport sensiblement parallèle à la direction d'avance A.

Dans une variante préférée de réalisation de la machine 1, le groupe de fauche 3 peut également occuper une configuration de manœuvre dans laquelle il est légèrement éloigné du sol. De manière préférée, dans la configuration de manœuvre du groupe de fauche 3, ce dernier est pivoté autour de l'axe AT de transport, dans une position comprise entre sa configuration de travail et sa configuration de transport.

Selon une autre caractéristique intéressante de l'invention, l'articulation longitudinale 10 de type glissière est située, dans la position abaissée du convoyeur 5, en dessous du plan passant par la surface de travail 6', permettant ainsi de ne pas perturber le flux de végétaux guidé vers le convoyeur 5 et provenant du groupe de fauche 3, respectivement de l'élément conditionneur 27. Afin de réduire les efforts dans la structure de liaison 7, la liaison glissière de l'articulation longitudinale 10 est en outre située à l'avant du convoyeur 5.

Avantageusement, les premier et deuxième bras de levier 24 et 24', respectivement le dispositif de basculement 19, s'étend(ent) en position abaissée du convoyeur 5, à l'avant du convoyeur 5, préférentiellement devant le côté longitudinal avant 5' de ce dernier. Ainsi, le centre de gravité de l'ensemble convoyeur 5 - structure de liaison 7 est proche du bâti 4, résultant en une diminution des contraintes dans ladite structure et au niveau de ses points de liaison avec ledit bâti.

Ainsi qu'illustré notamment sur les figures 2 et 7 notamment, le dispositif de basculement 19, respectivement les premier bras de levier 24 et deuxième bras de levier 24' sont reliés au bâti 4 par deux liaisons pivots 20 et 20' respectives d'axes mutuellement alignés et confondus avec l'axe d'escamotage AE. Le premier bras de levier 24 est relié au bras avant 9 par l'articulation avant 13 et le deuxième bras de levier 24' au bras latéral 11 par l'articulation latérale 14. L'articulation latérale 14 se présente préférentiellement sous la forme de deux articulations élémentaires à pivot, espacées et à axes mutuellement alignés, perpendiculaires à l'axe de coulissement AC de l'articulation longitudinale 10. Le cas échéant, la première branche articulée 8 comprend le premier bras de levier 24, et la deuxième branche articulée 8' le deuxième bras de levier 24'.

Tel que représenté sur la figure 5, chaque actionneur d'escamotage 21, 21' est relié au bâti 4 et respectivement au premier et deuxième bras de levier 24, 24'. Les actionneurs d'escamotage 21, 21' sont préférentiellement actionnés simultanément pour transférer le convoyeur 5 entre sa position abaissée et sa position relevée.

Afin de limiter davantage encore les contraintes dans la structure de liaison 7 lorsque le convoyeur 5 est en position abaissée, il peut être prévu que le convoyeur 5, respectivement le dispositif de basculement 19, prenne appui sur le bâti 4, en position abaissée du convoyeur 5, de préférence en dessous de la surface de travail 6' de l'organe de transfert 6 du convoyeur 5.

Comme le montre également la figure 1C, l'appui du dispositif de basculement sur le bâti 4 s'effectue avantageusement par l'intermédiaire de plots en matière élastique situés au niveau des extrémités libres des bras de levier 24 et 24'.

En vue de réduire les contraintes dans la structure de liaison 7 en position relevée, ou position d'escamotage, du convoyeur 5, il peut aussi être prévu que la distance séparant le plan passant par la surface de travail 6' de l'axe d'escamotage AE soit inférieure au diamètre de la trajectoire extérieure d'un couteau 26, en position abaissée du convoyeur 5. Ainsi, en position relevée, le convoyeur 5 est positionné proche du bâti 4.

Afin de rendre le réglage du positionnement latéral du convoyeur 5 plus confortable pour l'utilisateur, et notamment permettre une commande du déplacement latéral du convoyeur depuis une cabine de tracteur, la structure de liaison 7 comprend un vérin d'actionnement 22, associé de préférence au bras avant 9, et permettant de déplacer le convoyeur 5 latéralement par rapport à la direction d'avance A de la machine 1. En position abaissée du convoyeur 5, le vérin d'actionnement 22 s'étend à l'avant du convoyeur 5, et préférentiellement devant le côté longitudinal avant 5' de ce dernier. Le bras avant 9 peut en outre présenter une constitution télescopique (voir figures 1A, 1B et 3). Dans ce cas, la liaison glissière de l'articulation longitudinale 10 est donc réalisée par le vérin d'actionnement 22.

Le vérin d'actionnement 22 est fixé d'une part avec le bâti 4, de préférence par l'intermédiaire de la troisième articulation 13, et d'autre part avec le convoyeur 5. Le vérin d'actionnement 22 est destiné à réaliser le déplacement transversal du convoyeur 5.

On peut souligner que, quelle que soit la manière de réalisation de la liaison glissière de l'articulation longitudinale 10, un système d'arrêt axial (continu ou discret) permet de maintenir la position du convoyeur 5 par rapport à la structure de support 2 lors du déplacement latéral du convoyeur 5. Par exemple, dans le cas d'une constitution télescopique du bras avant 9, le système d'arrêt axial pourrait être réalisé par un axe inséré radialement dans des orifices réalisés à cet effet dans chacune des parties coulissantes de la constitution télescopique. De préférence, l'arrêt axial de la liaison glissière est cependant assuré par le vérin d'actionnement 22.

Le vérin d'actionnement 22 est de préférence à double effet. Tel qu'illustré sur la figure 1B, le cylindre du vérin d'actionnement 22 est fixé au côté longitudinal avant 5'. La tige du vérin d'actionnement 22 est en outre fixée à un tube 33 faisant partie du bras avant 9 et relié au bâti 4 par l'articulation avant 13. Ce tube 33 est en outre monté glissant dans deux œillets 33' fixés au côté avant longitudinal 5' du convoyeur 5, préférentiellement à proximité de l'extrémité 23 de ce côté. Préférentiellement, le bras jumeau 39, également réalisé sous la forme d'un tube, est monté glissant dans deux œillets 33'.

Le bras avant 9 est alors, dans cette variante constructive, formé par l'ensemble vérin 22/tube 33.

Préférentiellement, les bras avant 9 et bras latéral 11 sont tous deux disposés en dessous d'un plan comprenant l'axe d'escamotage AE et parallèle à la surface de travail 6' lorsque le convoyeur 5 est en position abaissée, permettant une réduction du poids de la structure de liaison 7 et des contraintes générées par celui-ci.

Pour éviter au maximum que les deux branches articulées 8 et 8' de la structure de liaison 7 ne perturbent le flux des végétaux coupés et à transférer, il est avantageusement prévu que dans une position de coulissement transversal du convoyeur 5 proche de l'articulation longitudinale 10, la projection plane des bras avant 9 et bras latéral 11 sur un plan parallèle à la surface de travail 6' de l'organe de transfert 6 du convoyeur 5 en position abaissée, sont situés en dehors de la surface de travail 6' du convoyeur 5.

Afin de pouvoir modifier la distance entre le plan médian M et le convoyeur 5, dans la position intérieure du convoyeur 5, il peut être prévu un système de positionnement additionnel permettant de translater le convoyeur 5 par rapport au tube 33 selon l'axe de coulissement AC. A cet effet, le système de positionnement comprend un moyen permettant de solidariser et désolidariser le tube 33 et/ou la broche 39 avec la partie du vérin d'actionnement 22 (cylindre ou tige) qui n'est pas fixée au convoyeur 5 (la tige dans l'exemple cité).

Tel que représenté sur la figure 12, le système de positionnement est une bride 43 solidaire de la tige du vérin d'actionnement 22. La bride 43 comprend deux parties mobiles qui peuvent être serrées ensemble afin d'arrimer la bride 43 au tube 33 par coincement. En desserrant et en écartant lesdites parties mobiles, il est possible de translater le tube 33 par rapport à la broche 39 selon l'axe de coulissement AC. Il est ainsi possible d'obtenir différentes positions intérieures du convoyeur 5 par rapport à la structure de support 2 (figure 4 : bride réglée en position proximale de la structure de support 2 ; et figure 10 : bride réglée en position distale) tout en conservant la même course possible de déplacement latéral du convoyeur 5 à partir de ces différentes positions intérieures. Ce système de positionnement additionnel permet avantageusement un réglage additionnel pour modifier la largeur de l'andain 28.

Dans le cadre du mode de réalisation illustré notamment par les figures 1A, 1B, 3 et 6 et décrit plus précisément ci-après en relation avec ces figures, la deuxième branche articulée 8' de la structure de liaison 7 comprend également une bielle 16 articulée, d'une part, avec le bras latéral 11 par le biais d'une articulation centrale 17 de type rotule et, d'autre part, avec le convoyeur 5 par le biais d'une articulation supérieure 18 également de type rotule, afin d'aboutir à un maintien rigide du convoyeur. Dans ce mode de réalisation, le bras latéral 11 est relié directement au convoyeur 5 par la première articulation arrière 12, qui est en outre une articulation de type rotule.

La figure 1B représente le convoyeur 5 en position extérieure dans laquelle il éloigné par rapport à la structure de support 2, le côté longitudinal avant 5' étant sensiblement perpendiculaire à la direction d'avance A.

La figure 1A représente le convoyeur 5 en position intérieure dans laquelle il est plus proche de la structure de support 2 que dans la position extérieure, le côté longitudinal avant 5' formant avec la direction d'avance A un angle compris entre 85° et 95°, et préférentiellement entre 88° et 92°. Il ressort que, dans le deuxième mode de réalisation, les articulations 10, 12, 13 et 14 permettent un déplacement latéral du convoyeur 5 sensiblement linéaire comprenant une composante de pivotement dans un plan sensiblement horizontal, plus précisément dans un plan parallèle à la surface de travail 6'. Lors de ce pivotement, le convoyeur 5 pivote autour d'un axe passant par l'articulation avant 13, selon un angle inférieur à 5°, plus précisément inférieur à 2°. Le déplacement latéral du convoyeur 5 ne comprend aucune composante verticale, ni de composante verticale de pivotement, ni de composante verticale de translation. Dans ce mode de réalisation, le déplacement latéral du convoyeur 5 se compose uniquement d'une translation et d'un pivotement, tous deux dans un plan parallèle à la surface de travail 6'.

Dans le mode de réalisation des figures 1, 3 et 6, pour pouvoir bloquer aisément le convoyeur 5 en rotation autour de la droite passant par la première articulation arrière 12 et l'articulation avant 13, l'articulation supérieure 18 est décalée par rapport à la ou une droite passant par la première articulation arrière 12 et l'articulation avant 13 et/ou par rapport à la surface de travail 6', ladite articulation supérieure 18 étant située dans la région de ladite première articulation arrière 12.

Avantageusement, l'articulation supérieure 18 est prévue sur la même pièce d'accrochage, rigidement solidaire du convoyeur 5, que la première articulation arrière 12 (voir figure 1C).

La bielle 16 peut, le cas échéant, être réglable en longueur, mécaniquement ou hydrauliquement, de manière discrète ou continue.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Machine agricole pour la récolte de végétaux, du type faucheuse,
ladite machine (1) comprenant essentiellement une structure de support (2), un groupe de fauche (3) et un bâti (4) reliant de manière articulée la structure de support (2) et le groupe de fauche (3) de manière à pouvoir déplacer ledit groupe de fauche (3) entre, d'une part, une configuration de travail dans laquelle il est en appui sur le sol (S) et s'étend latéralement par rapport à la structure de support (2) et sensiblement perpendiculairement à une direction d'avance (A) de la machine (1) et, d'autre part, une configuration de transport dans laquelle il est dans une position relevée à distance du sol (S),
ladite machine (1) comprenant également un convoyeur (5) ou un dispositif transporteur analogue, disposé à l'arrière du groupe de fauche (3) selon la direction d'avance (A) et comportant un organe mobile (6) transférant les végétaux fauchés transversalement par rapport à la direction d'avance (A), ledit convoyeur (5) présentant un côté longitudinal avant (5') plus proche du groupe de fauche (3) et un côté longitudinal arrière (5") plus éloigné de ce dernier et ledit convoyeur (5) étant relié au bâti (4) par une structure de liaison (7) autorisant, au moins lorsque ledit groupe de fauche (3) est dans sa configuration de travail, un déplacement latéral du convoyeur (5) dirigé sensiblement transversalement à la direction d'avance (A) au moins entre une position intérieure et une position extérieure,
la structure de liaison (7) comportant une première et une deuxième branches articulées (8 et 8') distinctes, chacune des première et deuxième branches articulées (8 et 8') reliant le bâti (4) au convoyeur (5), et
la structure de liaison (7) comprenant également un dispositif de basculement (19) comportant au moins deux actionneurs d'escamotage (21 et 21') destinés à transférer le convoyeur (5) entre une position abaissée et une position relevée dans laquelle le convoyeur (5) est éloigné du sol (S),
machine agricole (1) ***caractérisée en ce que***
chacune des première et deuxième branches articulées (8 et 8') intègre au moins une liaison rotule et est associée à un actionneur d'escamotage (21, 21'),
la première branche articulée (8) comprend un bras avant (9) articulé avec le convoyeur (5) par une articulation longitudinale (10) située au niveau du côté longitudinal avant (5') du convoyeur (5) et destinée à guider le déplacement latéral du convoyeur (5), et,
la deuxième branche articulée (8') comprend un bras latéral (11) relié avec le convoyeur (5) au niveau du côté longitudinal arrière (5") du convoyeur (5).

2. Machine selon la revendication 1, ***caractérisée en ce que*** le bras avant (9) est articulé avec le bâti (4) par une articulation avant (13), au moins une des articulation longitudinale (10) et articulation avant (13) étant une liaison rotule.

3. Machine selon l'une quelconque des revendications 1 et 2, ***caractérisée en ce que*** la deuxième branche (8') comprend un bras jumeau (39) articulé avec le convoyeur (5) par une deuxième articulation longitudinale (15).

4. Machine selon les revendications 1 et 2, ***caractérisée en ce que*** l'articulation longitudinale (10) et la deuxième articulation longitudinale (15) sont de type glissière ou pivot glissant, avec un axe de coulissement (AC) sensiblement perpendiculaire à la direction d'avance (A).

5. Machine selon l'une quelconque des revendications 2 et 3, ***caractérisée en ce que*** le bras jumeau (39) est articulé avec le bâti (4) par une articulation extérieure (38), au moins une des deuxième articulation longitudinale (15) et articulation extérieure (38) étant une liaison rotule.

6. Machine selon l'une quelconque des revendications 1 à 5, ***caractérisée en ce que*** le convoyeur (5) est soutenu à l'arrière uniquement par le bras latéral (11).

7. Machine selon **la revendication 4 ou la revendication 6, pour autant qu'elle se rattache à la revendication 4, *caractérisée en ce que*** le bras latéral (11) est relié avec le bâti (4) par une articulation latérale (14) de type pivot avec un axe de pivotement (AP) sensiblement perpendiculaire **à l'axe de coulissement (AC),** et avec le convoyeur (5) par l'intermédiaire d'une biellette (36) articulée avec le convoyeur (5) par une première articulation arrière (12) et avec le bras latéral (11) par une deuxième articulation arrière (37), les première et deuxième articulations arrières (12 et 37) étant des liaisons pivot d'axe parallèle à l'axe de pivotement (AP).

8. Machine selon l'une quelconque des revendications 1 à 7, ***caractérisée en ce qu***'en position abaissée du convoyeur (5), les premier et deuxième bras de levier (24 et 24') s'étendent à l'avant du convoyeur (5).

9. Machine selon l'une quelconque des revendications 1 à 8, ***caractérisée en ce que,*** la structure de liaison (7) comprend un vérin d'actionnement (22) permettant de déplacer le convoyeur (5) latéralement par rapport à la direction d'avance (A) de la machine (1), le vérin d'actionnement (22) s'étendant, en position abaissée du convoyeur (5), à l'avant du convoyeur (5).

10. Machine selon l'une quelconque des revendications 1 à 9, ***caractérisée en ce que*** le convoyeur (5) prend appui sur le bâti (4) en position abaissée du convoyeur (5), de préférence en dessous de la surface de travail (6').

11. Machine selon l'une quelconque des revendications 5 à 10, ***caractérisée en ce que*** le bras avant (9) et le bras latéral (11) sont disposés en dessous d'un plan comprenant l'axe d'escamotage (AE) et parallèle à la surface de travail (6') de l'organe mobile (6) lorsque le convoyeur (5) est en position abaissée.

## Patentansprüche

1. Landwirtschaftliche Maschine zum Ernten von Pflanzen, vom Typ eines Mähers,
wobei die Maschine (1) im Wesentlichen eine Tragkonstruktion (2), ein Mähwerk (3) und einen Rahmen (4) umfasst, der die Tragkonstruktion (2) und das Mähwerk (3) gelenkig miteinander verbindet, um das Mähwerk (3) zwischen einer eine Arbeitskonfiguration, in der es auf dem Boden (S) aufliegt und sich seitlich zur Tragkonstruktion (2) und im Wesentlichen senkrecht zur Vorwärtsrichtung (A) der Maschine (1) erstreckt, und andererseits eine Transportkonfiguration, in der es sich in einer vom Boden (S) entfernten angehobenen Position befindet zu bewegen,
wobei die Maschine (1) außerdem einen Förderer (5) oder eine ähnliche Transportvorrichtung umfasst, die hinter dem Mähwerk (3) in Vorwärtsrichtung (A) angeordnet ist und ein bewegliches Element (6) aufweist, das das gemähte Pflanzenmaterial quer zur Vorwärtsrichtung (A) befördert, wobei der Förderer (5) eine vordere Längsseite (5'), die näher an dem Mähwerk (3) liegt, und eine hintere Längsseite (5"), die weiter von diesem entfernt ist, aufweist und wobei der Förderer (5) mit dem Rahmen (4) durch eine Verbindungsstruktur (7) verbunden ist, die zumindest dann, wenn sich das Mähwerk (3) in seiner Arbeitskonfiguration befindet, eine seitliche Verschiebung des Förderers (5), die im Wesentlichen quer zur Vorschubrichtung (A) zumindest zwischen einer inneren Position und einer äußeren Position ermöglicht,
wobei die Struktur einen ersten und einen zweiten separaten Gelenkarm (8 und 8') umfasst, wobei jeder der ersten und zweiten Gelenkarme (8 und 8') den Rahmen (4) mit dem Förderer (5) verbindet, und
wobei die Verbindungsstruktur (7) auch eine Kippvorrichtung (19) umfasst, die mindestens zwei Einziehaktuatoren (21 und 21') umfasst, die dazu dienen, den Förderer (5) zwischen einer abgesenkten Position und einer angehobenen Position, in der der Förderer (5) vom Boden (S) entfernt ist, zu bewegen,
landwirtschaftliche Maschine (1)*, **dadurch gekennzeichnet, dass***
jeder der ersten und zweiten Gelenkarme (8 und 8') mindestens ein Kugelgelenk umfasst und ist mit einem Einziehaktuator (21, 21') verbunden,
wobei der erste Gelenkarm (8) einen vorderen Arm (9) umfasst, der über ein Längsgelenk (10) an der vorderen Längsseite (5') des Förderers (5) mit diesem verbunden ist und dazu dient, die seitliche Verschiebung des Förderers (5) zu fuhren, und,
wobei der zweite Gelenkarm (8') einen Seitenarm (11) umfasst, der mit dem Förderer (5) an der Rückseite (5") des Förderers (5) verbunden ist.

2. Maschine nach Anspruch 1, ***dadurch gekennzeichnet, dass*** der vordere Arm (9) über ein vorderes Gelenk (13) mit dem Rahmen (4) verbunden ist, wobei mindestens eines der Längsgelenke (10) und des vorderen Gelenks (13) ein Kugelgelenk ist.

3. Maschine nach einem der Ansprüche 1 und 2, ***dadurch gekennzeichnet, dass*** der zweite Gelenkarm (8') einen Zwillingsarm (39) umfasst, der über ein zweites Längsgelenk (15) mit dem Förderer (5) verbunden ist.

4. Maschine nach den Ansprüchen 1 und 2, ***dadurch gekennzeichnet, dass*** das Längsgelenk (10) und das zweite Längsgelenk (15) vom Typ Gleitgelenk oder Schwenkgelenk sind, mit einer Gleitachse (AC), die im Wesentlichen senkrecht zur Vorschubrichtung (A) steht.

5. Maschine nach einem der Ansprüche 2 und 3, ***dadurch gekennzeichnet, dass*** der Zwillingsarm (39) über ein Außengelenk (38) mit dem Rahmen (4) verbunden ist, wobei mindestens eines der zweiten Längsgelenk (15) und Außengelenk (38) ein Kugelgelenk ist.

6. Maschine nach einem der Ansprüche 1 bis 5, ***dadurch gekennzeichnet, dass*** der Förderer (5) hinten nur durch den Seitenarm (11) gestützt wird.

7. Maschine nach Anspruch 4 oder Anspruch 6, sofern er sich auf Anspruch 4 bezieht, ***dadurch gekennzeichnet, dass*** der Seitenarm (11) ist verbunden mit dem Rahmen (4) über ein Seitengelenk (14) vom Schwenkgelenk-Typ mit einer Schwenkachse (AP), die im Wesentlichen senkrecht zur Gleitachse (AC) verläuft, und mit dem Förderer (5) über eine Lenkstange (36), die über ein erstes hinteres Gelenk (12) mit dem Förderer (5) und über ein zweites hinteres Gelenk (37) mit dem Seitenarm (11) verbunden ist; wobei das erste und zweite hintere Gelenk (12 und 37) Schwenkverbindungen mit einer zur Schwenkachse (AP) parallelen Achse sind.

8. Maschine durch einem der Ansprüche 1 bis 7, ***dadurch gekennzeichnet, dass*** sich der erste und der zweite Hebelarm (24 und 24') in der abgesenkten Position des Förderers 5 vorne am Förderer (5) erstrecken.

9. Maschine nach einem der Ansprüche 1 bis 8, ***dadurch gekennzeichnet, dass*** die Verbindungsstruktur (7) einen Betätigungszylinder (22) umfasst, der es ermöglicht, den Förderer (5) seitlich zur Vorwärtsrichtung (A) der Maschine (1) zu verschieben, wobei der Betätigungszylinder (22) in der abgesenkten Position des Förderers (5) vor dem Förderer (5) erstreckt.

10. Maschine nach einem der Ansprüche 1 bis 9, ***dadurch gekennzeichnet, dass*** der Förderer (5) in der abgesenkten Position des Förderers (5) auf dem Rahmen (4) aufliegt, vorzugsweise unterhalb der Arbeitsfläche (6').

11. Maschine nach einem der Ansprüche 5 bis 10, ***dadurch gekennzeichnet, dass*** der Vorderarm (9) und der Seitenarm (11) beide unterhalb einer Ebene angeordnet sind, die die Einziehachse (AE) umfasst und parallel zur Arbeitsfläche (6') des beweglichen Elements (6) verläuft, wenn sich der Förderer (5) in der abgesenkten Position befindet.

## Claims

1. Agricultural machine 1 for harvesting plants, of the mower type,
said machine (1) comprising essentially a support structure (2), a mowing unit (3), and a frame (4) articulately connecting the support structure (2) and the mowing unit (3) so as to move said mowing unit (3) between, on the one hand, a work configuration in which it rests on the ground (S) and extends laterally relative to the support structure (2) and substantially perpendicular to a forward direction (A) of the machine (1), and, on the other hand, a transport configuration in which it is in a raised position away from the ground (S),
said machine (1) also comprising a conveyor (5) or similar transport device, arranged at the rear of the mowing unit (3) in the forward direction (A) and comprising a movable member (6) transferring the mowed plants transversely with respect to the forward direction (A), said conveyor (5) having a front longitudinal side (5') closer to the mowing unit (3) and a rear longitudinal side (5") further away from the latter, and said conveyor (5) being connected to the frame (4) by a connecting structure (7) allowing, at least when the mowing unit (3) is in its work configuration, lateral movement of the conveyor (5) directed substantially transversely to the forward direction (A) at least between an inner position and an outer position,
the connecting structure (7) comprising a first and a second articulated branches (8 and 8') being separate, each of these first and second articulated branches (8 and 8') connecting the frame (4) to the conveyor (5), and
the connecting structure (7) also comprising a tilting device (19) having at least two retraction actuators (21 and 21') for moving the conveyor (5) between a lowered position and a raised position in which the conveyor is away from the ground (S),
agricultural machine (1) ***characterised in that***
each of the first and second articulated branches (8 and 8') incorporates at least one ball joint and is associated with a retraction actuator (21, 21'),
the first articulated branch (8) comprises a front arm (9) articulated to the conveyor (5) by a longitudinal joint (10) located at the front longitudinal side (5') of the conveyor (5) and designed to guide the lateral movement of the conveyor (5),
the second articulated branch (8') comprises a lateral arm (11) connected to the conveyor (5) at the rear longitudinal side (5") of the conveyor (5).

2. Machine according to claim 1, ***characterised in that*** the front arm (9) is articulated with the frame (4) by a front joint (13), at least one of the longitudinal joint (10) and front joint (13) being a ball joint.

3. Machine according to any one of claims 1 and 2, ***characterised in that*** the second branch (8') comprises a twin arm (39) articulated to the conveyor (5) by a second longitudinal joint (15).

4. Machine according to claims 1 and 2, ***characterised in that*** the longitudinal joint (10) and the second longitudinal joint (15) are of the slide type or sliding pivot type, with a sliding axis (AC) substantially perpendicular to the forward direction (A).

5. Machine according to any one of claims 2 and 3, ***characterised in that*** the twin arm (39) is articulated with the frame (4) by an external joint (38), at least one the second longitudinal joint (15) and external joint (38) being a ball joint.

6. Machine according to any one of claims 1 to 5, ***characterised in that*** the conveyor (5) is supported at the rear solely by the lateral arm (11).

7. Machine according to claim 4 or claim 6, insofar as it depends on claim 4, ***characterised in that*** the lateral arm (11) is connected to the frame (4) by a lateral joint (14) of the pivot type with a pivot axis (AP) substantially perpendicular to the sliding axis (AC), and to the conveyor (5) by means of a small connecting rod (36) articulated to the conveyor (5) by a first rear joint (12) and to the lateral arm (11) by a second rear joint (37), the first and second rear joints (12 and 37) being pivot connections with axes parallel to the pivot axis (AP).

8. Machine according to any one of claims 1 to 7, ***characterised in that*** in the lowered position of the conveyor (5), the first and second lever arms (24 and 24') extend at the front of the conveyor (5).

9. Machine according to any one of claims 1 to 8, ***characterised in that*** the connecting structure (7) comprises an actuating cylinder (22) which enables the conveyor (5) to be moved laterally relative to the forward direction (A) of the machine (1), the actuating cylinder (22) extending at the front on the conveyor (5) when the conveyor (5) is in the lowered position.

10. Machine according to any one of claims 1 to 9, ***characterised in that*** the conveyor (5) rests on the frame (4) in the lowered position of the conveyor (5), preferably below the working surface (6').

11. Machine according to any one of claims 5 to 10, ***characterised in that*** the front arm (9) and the lateral arm (11) are both arranged below a plane comprising the retraction axis (AE) and parallel to the working surface (6') of the movable member (6) when the conveyor (5) is in the lowered position.
